# EUROPÄISCHE PATENTSCHRIFT

(11) **EP 1 626 876 B1**
(45) Veröffentlichungstag und Bekanntmachung des Hinweises auf die Patenterteilung: **31.12.2008**
(21) Anmeldenummer: 04739212.1
(22) Anmeldetag: 14.05.2004
(51) Int. Cl.: B60H 1/00

(54) **LUFTVERTEILERVORRICHTUNG ODER LUFTMISCHVORRICHTUNG**
AIR DISTRIBUTOR DEVICE OR AIR MIXING DEVICE
SYSTEME DE REPARTITION D'AIR OU SYSTEME DE MELANGE D'AIR

(30) Priorität: 16.05.2003 DE 10322457
(43) Veröffentlichungstag der Anmeldung: 22.02.2006
(73) Patentinhaber: Behr GmbH & Co. KG, 70469 Stuttgart (DE)
(72) Erfinder: DIEKSANDER, Wolfgang, 70794 Filderstadt (DE); HÖRIG, Harald, 76476 Bischweier (DE); ROSS, Reinhold, 71701 Schwieberdingen (DE)
(74) Vertreter: Grauel, Andreas
(86) Internationale Anmeldenummer: PCT/EP2004/005229
(87) Internationale Veröffentlichungsnummer: WO 2004/101301

(56) Entgegenhaltungen:
- EP-A- 1 070 611
- EP-A- 1 336 517
- DE-A- 19 611 193
- DE-U- 29 504 860
- FR-A- 2 763 286
- FR-A- 2 794 070
- US-A- 5 228 475

## Beschreibung

Die Erfindung betrifft eine Luftverteitervorrichtung, insbesondere zur Luftverteilung in einem Belüftungssystem eines Kraftfahrzeugs, oder eine Luftmischvorrichtung, insbesondere zur Temperaturregelung in einem Klimagerät eines Kraftfahrzeugs, gemäß den Oberbegriffen der Ansprüche 1 und 2.

Gattungsgemäße Vorrichtungen sind offenbart in FR2794070 A.

Derartige Vorrichtungen werden für zwei unterschiedliche Anwendungsfälle verwendet, weisen aber viele Gemeinsamkeiten auf: Zum Einen dient die Luftverteilervorrichtung als eine Art Weiche, wobei eine Luftverteilerklappe einströmende Luft in zwei oder mehr Luftströme aufteilt oder mehrere Teilströme bündelt. Derartige Weichen werden zum Beispiel im Frischluft/Umluftgehäuse einer Belüftungsvorrichtung eines Kraftfahrzeugs verwendet. Zum Anderen können derartige Luftverteilervorrichtungen zur Temperaturregelung in einem Klimagerät dienen. Hierbei ist eine Kaltluft-Klappe und eine Warmluft-Klappe im Luftführungsgehäuse vorgesehen, mit deren Hilfe die Temperatur geregelt wird, wobei im Zustand "maximal Heizen" die Warmluft-Klappe vollständig geöffnet und die Kaltluft-Klappe vollständig geschlossen ist, im Zustand "maximal Kühlen" die Warmluft-Klappe vollständig geschlossen und die Kaltluft-Klappe vollständig geöffnet ist, und im geregelten Zustand die beiden Klappen teilweise geöffnet sind.

So weist die aus der FR 2 763 286 A1 bekannte Luftverteilervorrichtung ein Gehäuse mit zwei in einem Winkel zueinander angeordnete Luft-Einlässe auf. Eine bewegliche Klappe weist eine abdichtende Wand und zwei Stellelemente auf, mittels welcher die Klappe in zwei Positionen bewegt werden kann, in denen sie die Luft-Einlässe abdichtet. Die Klappe ist am Gehäuse mittels Führungen verbunden, welche bewirken, dass sich die Klappe in einer Bewegung, die sich von einer reinen Drehung unterscheidet, bewegt. Die Führungen weisen zwei Kurvenbahnen und zwei an der Klappe vorgesehene, voneinander beabstandete Zapfen auf, die in den Kurvenbahnen geführt werden.

Nachteilig bei den bekannten Luftverteilervorrichtungen ist, dass je Zone einer Klimaanlage mindestens zwei Klappen benötigt werden. Hinzu kommt die kinematische- oder elektrische Kopplung, z.B. über einen Schrittmotor oder eine U-Dose, wobei eine derartige Kopplung in Verbindung mit dem erforderlichen Schwenkweg der Klappen keine kompakte Bauweise zulässt.

Es ist Aufgabe der Erfindung, eine verbesserte Luftverteilervorrichtung oder Luftmischvorrichtung zur Verfügung zu stellen.

Diese Aufgabe wird gelöst durch eine Luftverteilervorrichtung oder eine Luftmischvorrichtung mit den Merkmalen der Ansprüche 1 und 2. Vorteilhafte Ausgestaltungen sind Gegenstand der Unteransprüche.

Erfindungsgemäß ist eine Luftverteilervorrichtung oder eine Luftmischvorrichtung derart ausgebildet, dass im Luftführungsgehäuse ein Luft-Einlass und zwei Luft-Auslässe bzw. zwei Luft-Einlässe und ein Luft-Auslass vorgesehen sind, welche durch die Klappe ganz und/oder teilweise verschließbar sind. Hierbei sind die beiden Luft-Auslässe bzw. Luft-Einlässe vorzugsweise im Wesentlichen parallel zueinander angeordnet.

Dadurch, dass jeweils eine Klappe gegenüber dem Stand der Technik entfällt, ist eine kompaktere Bauweise möglich. Ferner entfällt die mechanische Kopplung, z.B. über einen Stellhebel, wodurch Bauraum eingespart und die Hysterese reduziert wird. Die Verwendung einer Schiebe-Klappe bringt zudem akustische Vorteile.

Gemäß der Ausführungsform sind zur Führung der Klappe zwei übereinander angeordnete Kurvenbahnen und zwei an der Klappe angebrachte, miteinander fluchtende Zapfen vorgesehen. Hierbei ist die Kurvenbahn bevorzugt gerade, mit im Wesentlichen geraden Teilstrecken und/oder in einem Radius ausgebildet, jedoch sind auch andere gebogene Bahnformen möglich.

Ein Trägermodul ist vorgesehen, welches ins Luftführungsgehäuse eingesetzt ist und die Klappe samt deren Führung umfasst. Dies ermöglicht eine einfache Vormontage und vereinfacht die Endmontage.

Die Klappe wird über einen Stellhebel positioniert, insbesondere in mindestens zwei Stellungen, vorzugsweise in beliebige Stellungen zwischen zwei Endstellungen. Der Stellhebel ist schwenkbar mit einer Antriebswelle und der Klappe verbunden, so dass lediglich Zug- und/oder Schubkräfte wirken.

Am oder im Bereich des Stellhebels kann einen Luftspoiler vorgesehen sein, welcher die Luftströmung positiv beeinflusst.

Eine Dichtkante sorgt insbesondere bei Luftmischvorrichtungen für eine Trennung von kalter und warmer Luft.

Im Folgenden wird die Erfindung anhand eines Ausführungsbeispiels mit Varianten unter Bezugnahme auf die Zeichnung im Einzelnen erläutert. In der Zeichnung zeigen:
- Fig. 1a und 1b: zwei Schnittdarstellungen einer Luftverteilervorrichtung in verschiedenen Stellungen, wobei in Fig. 1a links die Stellung Heizen und rechts die Stellung Kühlen und in Fig. 1b links eine Zwischenstellung und rechts die Stellung Kühlen dargestellt ist,
- Fig. 1c und 1d: zwei Schnittdarstellung der Luftverteilervorrichtung von Fig. 1a und 1b mit Darstellung der Luftströmung,
- Fig. 1e: Detailschnittdarstellung der Luftverteilervorrichtung von Fig. 1d mit Darstellung der Luftströmung,
- Fig. 2a-c: eine perspektivische Darstellung einer ersten Variante des Ausführungsbeispiels in verschiedenen Stellungen, wobei in Fig. 2a die Stellung Heizen, in Fig. 2b eine Zwischenstellung und in Fig. 2c die Stellung Kühlen dargestellt ist,
- Fig. 3a-d: verschiedene Darstellungen einer nicht beanspruchten Variante des Ausführungsbeispiels,
- Fig. 4a-c: verschiedene Varianten der Hebelanlenkung, und
- Fig. 5a-d: verschiedene Kurvenbahnen.

Eine erfindungsgemäße Luftverteilervorrichtung 1 mit einem Luftführungsgehäuse 2, das weichenartig mit einem Luft-Einlass 3, und zwei Luft-Auslässen 4, 5 ausgebildet ist, weist eine verschiebbare Klappe 6 auf, welche die Luft-Auslässe 4 und 5 bei Bedarf verschließen kann. Hierbei wird durch den gemeinsamen Luft-Einlass 3 von einem Verdampfer kommende, kalte Luft zugeführt, die beim Weg durch den Luft-Auslass 5 durch einen Heizkörper geleitet und durch diesen erwärmt wird. Beim Weg durch den Luft-Auslass 4 wird der Heizkörper umgangen, weshalb keine Erwärmung der Luft erfolgt. Vorliegend sind zwei achssymmetrisch angeordnete Luftverteilervorrichtungen 1 angeordnet, wobei die beiden Luft-Auslässe 5 mittig angeordnet sind.

Im Folgenden wird nur eine der beiden Luftleitvorrichtungen 1 näher beschrieben. Die Klappe 6 auf ihrer einen Seite weist zwei miteinander fluchtende Zapfen 7, welche in parallel zueinander im Luftführungsgehäuse 2 ausgebildeten Kurvenbahnen 8 geführt werden, und auf ihrer anderen Seite einen schwenkbar angebrachten Stellhebel 9 auf, welcher beispielsweise mittels eines Stellmotors (nicht dargestellt) die Klappe 6 verschiebt.

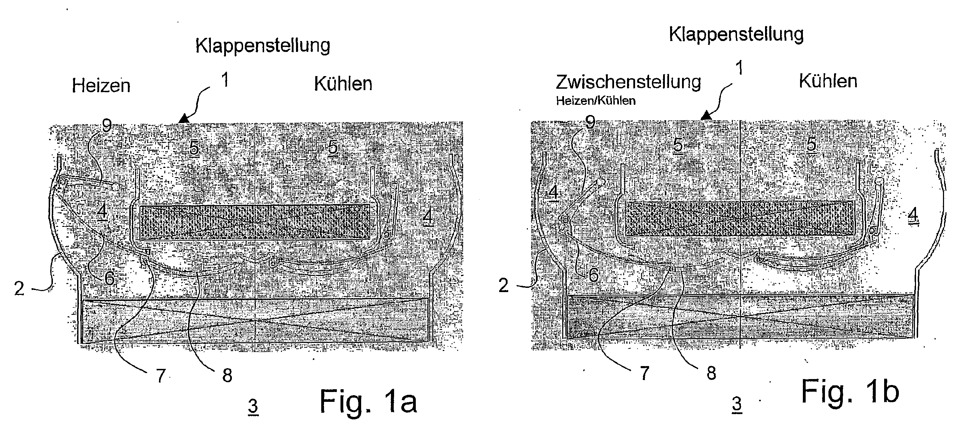

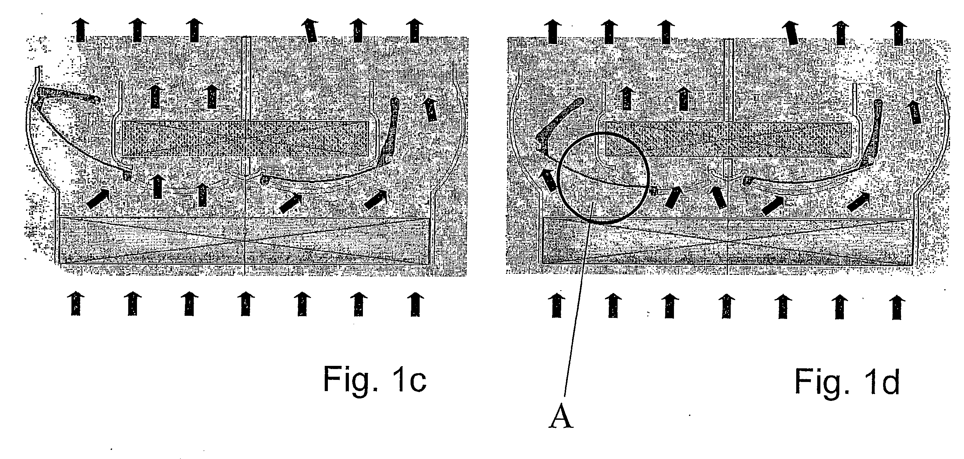

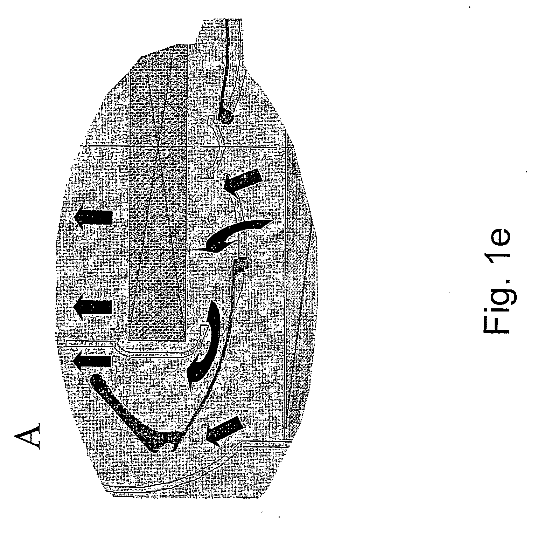

Fig. 1a, linke Hälfte zeigt eine erste Endstellung der Klappe 6, bei der die Klappe 6 den Luft-Auslass 4 vollständig verschließt und den Luft-Auslass 5 vollständig freigibt. Wird die Klappe 6 durch den Stellmotor betätigt, so führt der Stellhebel 9 im Wesentlichen eine Schwenkbewegung durch wobei er das mit ihm verbundene Ende der Klappe 6 mitnimmt, wohingegen der Bereich der Klappe 6, der sich in der Nähe der Zapfen 7 befindet, im Wesentlichen der Bahn der Kurvenbahnen 8 folgt. In der in Fig. 1b links dargestellten Zwischenstellung sind beide Luft-Auslässe 4 und 5 teilweise freigegeben, während in der zweiten, in Fig. 1a und b rechts dargestellten Endstellung der Luft-Auslass 4 vollständig offen und der Luft-Auslass 5 vollständig verschlossen ist. Fig. 1e zeigt das Überströmen der Luft hinter der Klappe 6 wodurch die Luftströmung bzw. die Luftmischung positiv beeinflusst werden kann. Ist das Überströmen nicht erwünscht, dann kann es durch die Bewegungsgeometrie der Klappe 6 verhindert werden, beispielsweise indem die Klappe 6 während des Bewegungsablaufs im Bereich der Überströmung anliegt. Eine Dichtkante in diesem Bereich kann diesen Effekt verbessern.

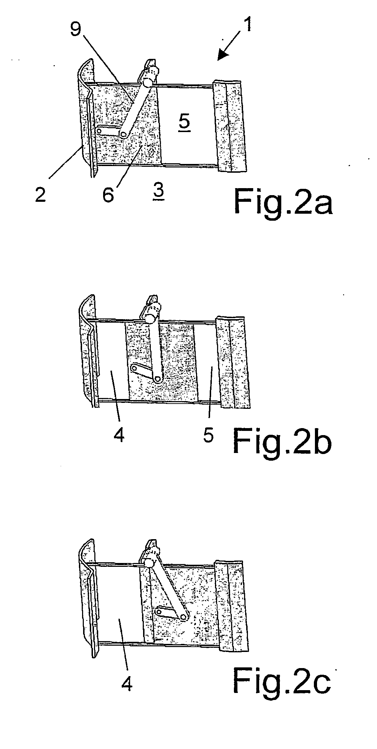

Fig. 2a-c zeigt eine erste Variante mit geraden Kurvenbahnen und bei der die Klappe 6 eine reine Längsbewegung durchläuft. Gleiche oder gleichwirkende Bauteile sind hierbei, ohne dass dieselben näher beschrieben sind, mit den gleichen Bezugszeichen wie beim zuvor beschriebenen Ausführungsbeispiel bezeichnet. Die Schiebeklappe 6 kann in Abhängigkeit von der Form der Führungsbahn während der Bewegung so gesteuert werden, dass die Klappe 6 in den beiden Endstellungen am Dichtrahmen anliegt und in den Zwischenstellungen aber frei läuft.

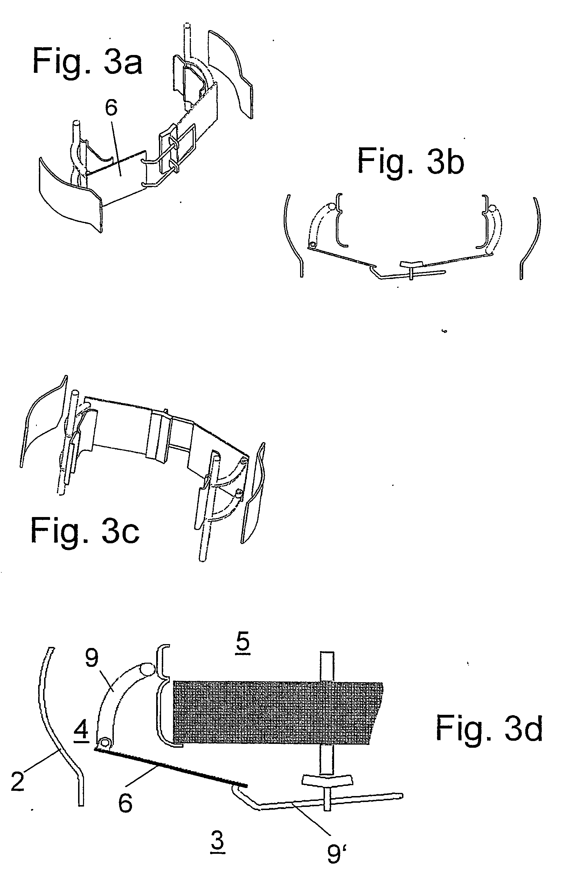

Gemäß einer in Fig. 3a-d dargestellten Variante erfolgt die Führung über einen Steuerstift 9', wobei die Zapfen und Kurvenbahnen entfallen können.

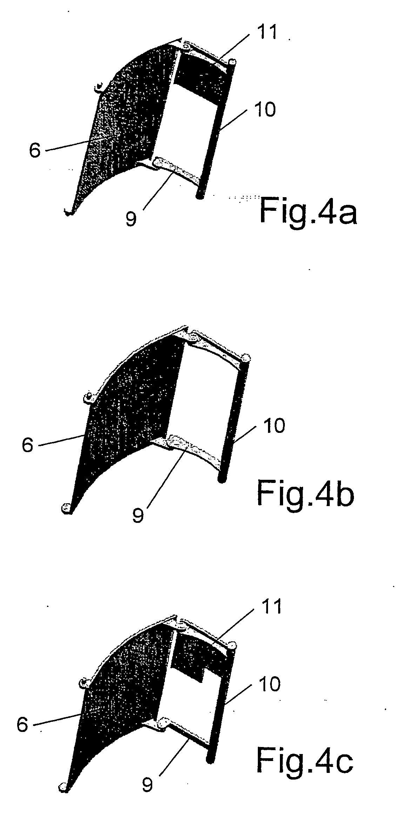

Fig. 4a-c zeigen unterschiedliche Varianten der Hebelanlenkung des bzw. der Stellhebel 9. Hierbei sind jeweils zwei Stellhebel 9 an ihren "freien" Enden schwenkbar mit der Klappe 6 und mit ihren anderen Enden aus Stabilitätsgründen mit einer Antriebswelle 10 verbunden, wobei ein Stellhebel 9 im oberen und ein Stellhebel 9 im unteren Bereich der Klappe 6 angelenkt ist. Gemäß einer in Fig. 4a dargestellten Variante ist ein Leitspoiler 11 zur Luftführung vorgesehen, der etwa über die Hälfte der Klappenhöhe verläuft. Bei der zweiten, in Fig. 4b dargestellten Variante ist kein Leitspoiler vorgesehen. Die dritte, in Fig. 4c dargestellte Variante weist einen L-förmigen Leitspoiler 11 auf, dessen einer Schenkel sich zwischen Antriebswelle 10 und Klappe 6 und dessen anderer Schenkel bei der Klappe 6 parallel zur Antriebswelle 10 zum unteren Stellhebel 9 hin verläuft. Der Luftspoiler 11 wirkt sich auf die Luftmischung aus. Der Luftspoiler 11 kann zur definierten Luftführung auch andere Bauformen aufweisen, beispielsweise dreidimensionale Anformungen.

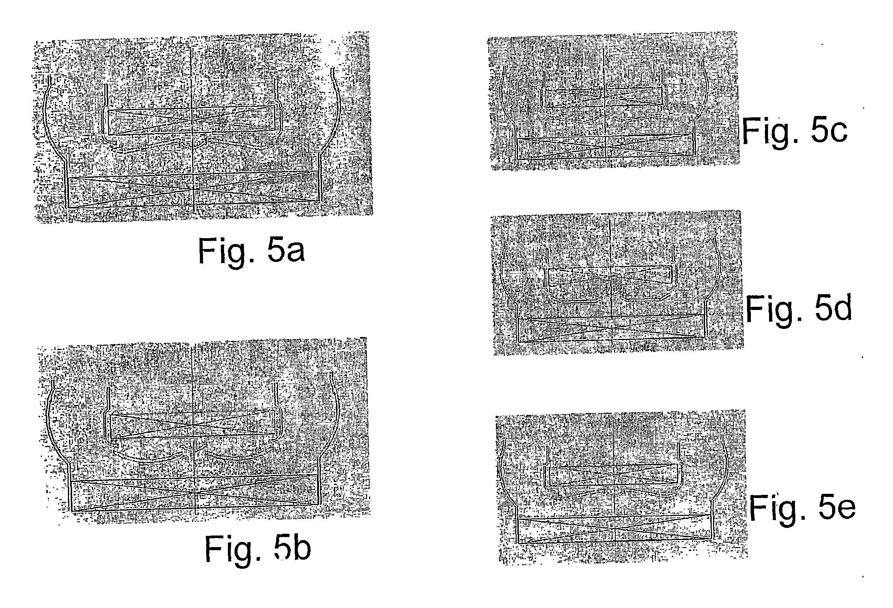

Die Figuren 5a-e zeigen verschiedene Varianten von Kurvenbahnen entlang denen die Zapfen geführt werden können. Normalerweise erfolgt die Führung über zwei fluchtende Zapfenpaare, jedoch kann beispielsweise auch nur ein fluchtendes Zapfenpaar und ein einzelner, auf der Gegenseite angeordneter Zapfen angeordnet sein. Weitere Zapfenanordnungen sind möglich. Sind die Kurvenbahnen derart ausgebildet, dass die Klappe nicht schleift, d.h. sie wird beim Verstellen zuerst von ihren Anlageflächen entfernt, so ist ein verringerter Kraftaufwand zum Verstellen erforderlich und die Standzeit von Dichtungen erhöht sich.

In den Figuren sind keine Dichtkanten dargestellt, welche sich an der Klappe und/oder am Trägermodul befinden können.

Durch Richtungsumkehr, d.h. einer umgekehrten Luftströmungsrichtung, werden aus den zuvor beschriebenen Luftverteilervorrichtungen Luftmischvorrichtungen.

### Bezugszeichenliste

- 1: Luftverteilervorrichtung
- 2: Luftführungsgehäuse
- 3: Luft-Einlass
- 4, 5: Luft-Auslässe
- 6: Klappe
- 7: Zapfen
- 8: Kurvenbahn
- 9: Stellhebel
- 9': Steuerstift
- 10: Antriebswelle
- 11: Leitspoiler

## Patentansprüche

1. Luftverteilervorrichtung mit einem Luftführungsgehäuse (2) und einer im Luftführungsgehäuse (2) angeordneten, verstellbaren Klappe (6), wobei im Luftführungsgehäuse (2) ein Luft-Einlass (3) und zwei Luft-Auslässe (4, 5) vorgesehen sind, welche durch die Klappe (6) ganz und/oder teilweise verschließbar sind, wobei ein Stellhebel (9) vorgesehen ist, der schwenkbar mit einer Antriebswelle (10) und der Klappe (6) verbunden ist und mit dem die Klappe (6) in mindestens zwei Positionen gebracht werden kann, wobei insgesamt zwei übereinander angeordnete Kurvenbahnen (8) und insgesamt zwei an der Klappe (6) angebrachte miteinander fluchtende Zapfen (7) zur Führung der Klappe vorgesehen sind, **dadurch gekennzeichnet, dass** ein Trägermodul vorgesehen ist, welches ins Luftführungsgehäuse (2) eingesetzt ist und die Klappe (6) samt deren Führung (8) umfasst.

2. Luftmischvorrichtung mit einem Luftführungsgehäuse und einer im Luftführungsgehäuse angeordneten, verstellbaren Klappe, wobei im Luftführungsgehäuse zwei Luft-Einlässe und ein Luft-Auslass vorgesehen sind, welche durch die Klappe ganz und/oder teilweise verschließbar sind, wobei ein Stellhebel (9) vorgesehen ist, der schwenkbar mit einer Antriebswelle (10) und der Klappe (6) verbunden ist und mit dem die Klappe (6) in mindestens zwei Positionen gebracht werden kann, wobei, insgesamt zwei übereinander angeordnete Kurvenbahnen (8) und insgesamt zwei an der Klappe (6) angebrachte miteinander fluchtende Zapfen (7) zur Führung der Klappe vorgesehen sind, **dadurch gekennzeichnet, dass** ein Trägermodul vorgesehen ist, welches ins Luftführungsgehäuse (2) eingesetzt ist und die Klappe (6) samt deren Führung (8) umfasst.

3. Luftverteilervorrichtung oder Luftmischvorrichtung nach Anspruch 1 oder 2, **dadurch gekennzeichnet, dass** die Kurvenbahn gerade, mit geraden Teilstrecken und/oder in einem Radius ausgebildet ist.

4. Luftverteilervorrichtung oder Luftmischvorrichtung nach einem der vorhergehenden Ansprüche, **dadurch gekennzeichnet, dass** der Stellhebel (9) einen Luftspoiler (11) aufweist.

5. Luftverteilervorrichtung oder Luftmischvorrichtung nach einem der vorhergehenden Ansprüche, **dadurch gekennzeichnet, dass** eine Dichtkante ausgebildet ist.

6. Luftverteilervorrichtung oder Luftmischvorrichtung nach einem der vorhergehenden Ansprüche, **dadurch gekennzeichnet, dass** die beiden Luft-Auslässe (4, 5) bzw. die beiden Luft-Einlässe parallel zueinander ausgerichtet sind.

## Claims

1. Air distributor device with an air guide housing (2) and with an adjustable flap (6) arranged in the air guide housing (2), one air inlet (3) and two air outlets (4, 5) being provided in the air guide housing (2), which can be closed completely and/or partially by the said flap (6), an actuating lever (9) being provided, which is connected to pivot on a driveshaft (10) and also connected to the flap (6), by means of which the flap (6) can be moved into at least two positions, and a total of two curved tracks (8) arranged one above the other and two pins (7) attached to the flap (6) and aligned with one another being provided for guiding the flap (6), **characterised in that** a carrier module is provided, which is inset into the air guide housing (2) and which holds the flap (6) together with its guides (8).

2. Air mixing device with an air guide housing and an adjustable flap arranged in the air guide housing, two ait inlets and one air outlet being provided, which can be closed completely and/or partially by the flap, an actuating lever (9) being provided, which is connected to pivot on a driveshaft and also connected to the flap (6), by means of which the flap (6) can be moved into at least two positions, and a total of two curved tracks (8) arranged one above the other and two pins (7) aligned with one another being provided for guiding the flap, **characterised in that** a carrier module in provided, which is inset into the air guide housing (2) and which holds the flap (6) together with its guides (8).

3. Air distributor device or air mixing device according to Claims 1 or 2, **characterised in that** the curved track is designed to be straight, with straight portions and/or in one radius.

4. Air distributor device or air mixing device according to any of the preceding claims, **characterised in that** the actuating lever (9) has an air spoiler (11).

5. Air distributor device or air mixing device according to any of the preceding claims, **characterised in that** a sealing edge is formed.

6. Air distributor device or air mixing device according to any of the preceding claims, **characterised in that** the two air outlets (4, 5) or the two air inlets are orientated parallel to one another.

## Revendications

1. Dispositif diffuseur d'air comprenant un carter de guidage d'air (2) et un volet réglable (6) disposé dans le carter de guidage d'air (2), où il est prévu, dans le carter de guidage d'air (2), une entrée d'air (3) et deux sorties d'air (4, 5) qui peuvent être fermées complètement et / ou partiellement par le volet (6), où il est prévu un levier de commande (9) qui est relié, de façon pivotante, à un arbre d'entraînement (10) et au volet (6), levier de commande avec lequel le volet (6) peut être placé dans au moins deux positions, où il est prévu au total deux pistes de cames (8) disposées l'une au-dessus de l'autre et au total deux tourillons (7) alignés l'un par rapport à l'autre, montés sur le volet (6) et servant au guidage du volet,
**caractérisé en ce qu'**il est prévu un module support qui est introduit dans le carter de guidage d'air (2) et comprend le volet (6) ainsi que son guidage (8).

2. Dispositif mélangeur d'air comprenant un carter de guidage d'air et un volet réglable disposé dans le carter de guidage d'air, où il est prévu, dans le carter de guidage d'air, deux entrées d'air et une sortie d'air qui peuvent être fermées complètement et / ou partiellement par le volet, où il est prévu un levier de commande (9) qui est relié, de façon pivotante, à un arbre d'entraînement (10) et au volet (6), levier de commande avec lequel le volet (6) peut être placé dans au moins deux positions, où il est prévu au total deux pistes de cames (8) disposées l'une au-dessus de l'autre et au total deux tourillons (7) alignés l'un par rapport à l'autre, montés sur le volet (6) et servant au guidage du volet,
**caractérisé en ce qu'**il est prévu un module support qui est introduit dans le carter de guidage d'air (2) et comprend le volet (6) ainsi que son guidage (8).

3. Dispositif diffuseur d'air ou dispositif mélangeur d'air selon la revendication 1 ou 2, **caractérisé en ce que** la piste de came est configurée de façon rectiligne, comportant des tronçons rectilignes et / ou formée dans un rayon.

4. Dispositif diffuseur d'air ou dispositif mélangeur d'air selon l'une quelconque des revendications précédentes, **caractérisé en ce que** le levier de commande (9) présente un déflecteur d'air (11).

5. Dispositif diffuseur d'air ou dispositif mélangeur d'air selon l'une quelconque des revendications précédentes, **caractérisé en ce qu'**un bord d'étanchéité est formé.

6. Dispositif diffuseur d'air ou dispositif mélangeur d'air selon l'une quelconque des revendications précédentes, **caractérisé en ce que** les deux sorties d'air (4, 5) ou les deux entrées d'air sont orientées parallèlement l'une par rapport à l'autre.
